# EUROPEAN PATENT APPLICATION

(11) **EP 3 310 062 A1**
(43) Date of publication of application: **18.04.2018**
(21) Application number: 16807316.1
(22) Date of filing: 30.05.2016
(51) Int. Cl.: H04N 21/235, H04N 21/435, H04N 21/8543

(54) **INFORMATION PROCESSING DEVICE AND INFORMATION PROCESSING METHOD**

(30) Priority: 12.06.2015 JP 2015119362; 23.06.2015 JP 2015125915
(71) Applicant: Sony Corporation, Tokyo 108-0075 (JP)
(72) Inventor: HIRABAYASHI Mitsuhiro, Tokyo 108-0075 (JP); YAMAGISHI Yasuaki, Tokyo 108-0075 (JP)
(74) Representative: D Young & Co LLP
(86) International application number: PCT/JP2016/065867
(87) International publication number: WO 2016/199609

(57) **Abstract**

The present disclosure relates to an information processing apparatus and an information processing method which are capable of setting AdaptationSet that does not include Representation.
A file generating apparatus sets first AdaptationSet including a plurality of items of Representation corresponding to encoded streams having predetermined bit rates and second AdaptationSet not including Representation. The present disclosure is applicable to a file generating apparatus, etc. of an information processing system that distributes encoded streams of a mosaic image as an image of a moving-image content to a moving-image playback terminal according to a process equivalent to MPEG-DASH, for example.

## Description

### [Technical Field]

The present disclosure relates to an information processing apparatus and an information processing method, and more particularly to an information processing apparatus and an information processing method which are capable of setting AdaptationSet that does not include Representation.

### [Background Art]

In recent years, OTT-V (Over The Top Video) has become mainstream in the streaming services on the Internet. One technique that has started to come into wide use as the fundamental technology for OTT-V is MPEG-DASH (Moving Picture Experts Group phase-Dynamic Adaptive Streaming over HTTP (HyperText Transfer Protocol)) (see, for example, NPL 1).

According to MPEG-DASH, a distribution server provides encoded streams having different bit rates for one moving-image content, and a playback terminal demands encoded streams having an optimum bit rate, thereby realizing adaptive streaming distribution.

MPEG-DASH SRD (Spatial Relationship Description) extension defines SRD indicating the position on a screen of one or more individually encoded regions into which an image of a moving-image content has been divided (see, for example, NPLs 2 and 3). The SRD makes it possible to realize a ROI (Region of Interest) function of spatial adaptation for selectively acquiring an encoded stream of an image of a desired region, using a bitrate adaptation method for selectively acquiring encoded streams having desired bit rates.

If an image of a moving-image content is a mosaic image made up of thumbnail images (divided images) of a moving image from a plurality of broadcast programs, then it may be conceivable to indicate the positions of the thumbnail images on a screen with an SRD.

However, according to an SRD, the positions on a screen of respective thumbnail images and positions on a mosaic image compatible with encoded streams are described as identical to each other. Therefore, if the positions on a screen of respective thumbnail images and positions on a mosaic image compatible with encoded streams are different from each other, the positions on the screen of the respective thumbnail images cannot be described using the SRD.

Therefore, it has been desirous of reliably describing the positions on a screen of respective thumbnail images, so that they can be recognized. Furthermore, in the event that there are encoded streams of a mosaic image having a plurality of bit rates, if the positions on a screen of respective thumbnail images are described for the respective bit rates, then the description tends to be redundant. It has also been desirous of preventing such a problem.

### [Citation List]

### [Patent Literature]

[NPL 1]
   MPEG-DASH (Dynamic Adaptive Streaming over HTTP) (URL: http://mpeg.chiariglione.org/standards/mpeg-dash/media-presentation-description-and-segment-formats/text-isoiec-23009-12012-dam-1)
[NPL 2]
   "Text of ISO/IEC 23009-1:2014 FDAM 2 Spatial Relationship Description, Generalized URL parameters and other extensions," N15217, MPEG111, Geneva, February 2015
[NPL 3]
   "WD of ISO/IEC 23009-3 2nd edition AMD 1 DASH Implementation Guidelines," N14629, MPEG109, Sapporo, July 2014

### [Summary]

### [Technical Problem]

MPD (Media Presentation Description) files have not been considered to set AdaptationSet that does not include Representation.

The present disclosure has been made under the circumstances described above, and is aimed at being able to set AdaptationSet that does not include Representation.

### [Solution to Problem]

An information processing apparatus according to a first aspect of the present disclosure is an information processing apparatus including a setting section that sets first AdaptationSet including a plurality of items of Representation corresponding to encoded streams having predetermined bit rates and second AdaptationSet not including Representation.

An information processing method according to the first aspect of the present disclosure corresponds to the information processing apparatus according to the first aspect of the present disclosure.

According to the first aspect of the present disclosure, first AdaptationSet including a plurality of items of Representation corresponding to encoded streams having predetermined bit rates and second AdaptationSet not including Representation are set.

An information processing apparatus according to a second aspect of the present disclosure is an information processing apparatus including a player that plays back encoded streams having predetermined bit rates on the basis of first AdaptationSet including a plurality of items of Representation corresponding to the encoded streams and second AdaptationSet not including Representation.

According to the second aspect of the present disclosure, encoded streams having predetermined bit rates are played back on the basis of first AdaptationSet including a plurality of items of Representation corresponding to the encoded streams and second AdaptationSet not including Representation.

The information processing apparatus according to the first and second aspects can be implemented by a computer when it executes programs.

In order to implement the information processing apparatus according to the first and second aspects, the programs to be executed by the computer can be provided by being transmitted through a transmission medium or recorded on a recording medium.

### [Advantageous Effects of Invention]

According to the first aspect of the present disclosure, information can be set. According to the first aspect of the present disclosure, it is possible to set AdaptationSet that does not include Representation.

According to the second aspect of the present disclosure, encoded streams can be played back. According to the second aspect of the present disclosure, encoded streams can be played back on the basis of AdaptationSet that does not include Representation.

The advantages described above are not necessarily restrictive in nature, but any of the advantages described in the present disclosure are applicable.

### [Brief Description of Drawings]

[FIG. 1]

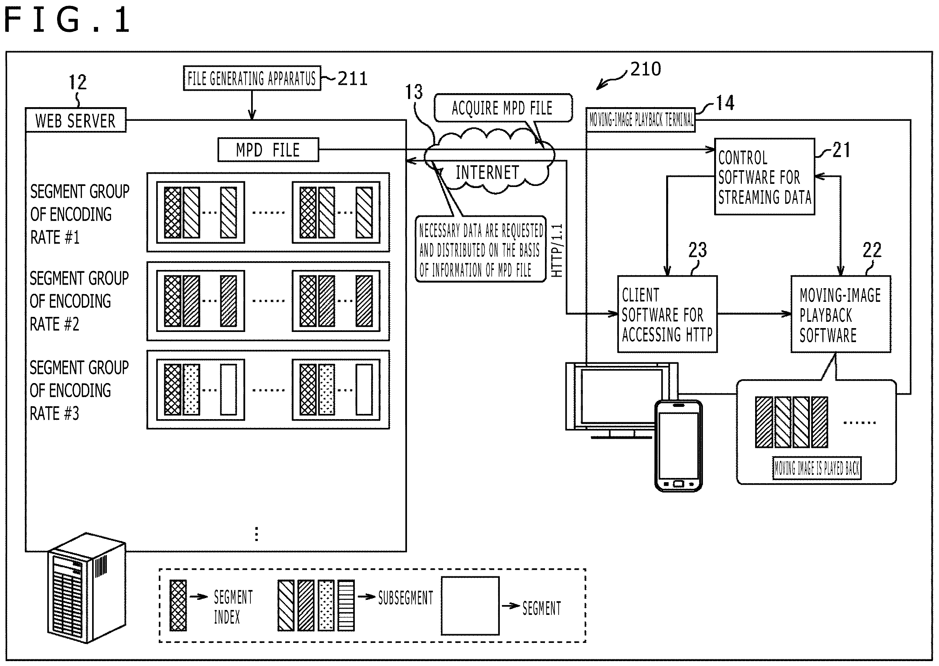

   FIG. 1 is a block diagram depicting a configurational example of a first embodiment of an information processing system to which the present disclosure is applied.
[FIG. 2]

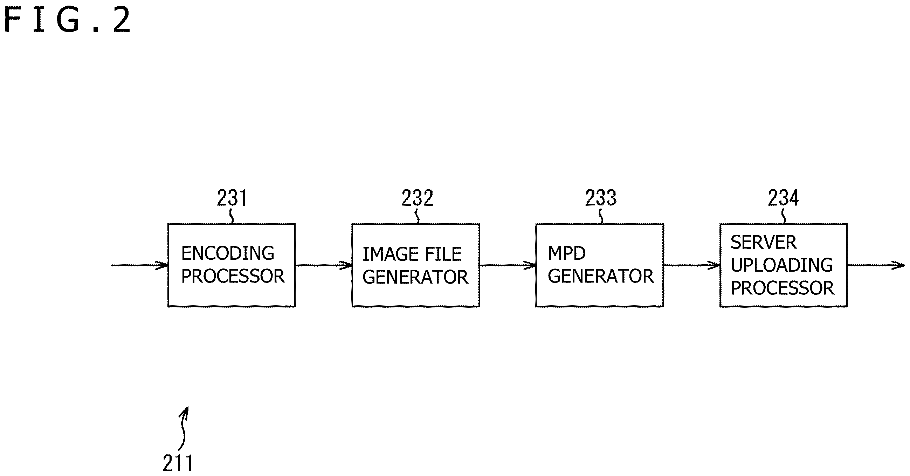

   FIG. 2 is a block diagram depicting a configurational example of a file generating apparatus depicted in FIG. 1.
[FIG. 3]

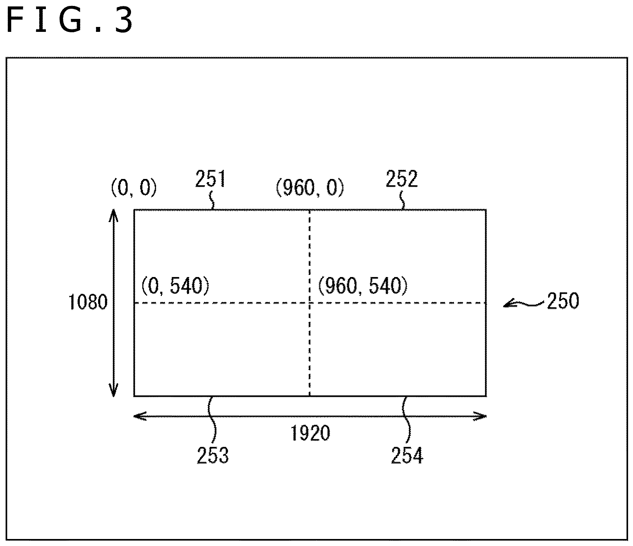

   FIG. 3 is a diagram depicting an example of a mosaic image.
[FIG. 4]

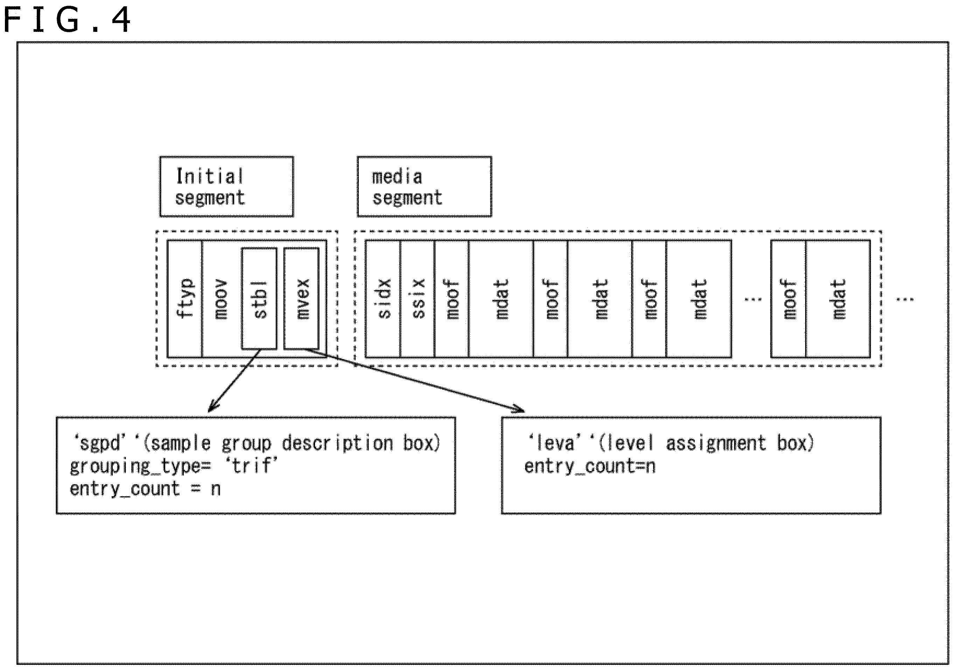

   FIG. 4 is a diagram depicting an example of a segment structure of an image file.
[FIG. 5]

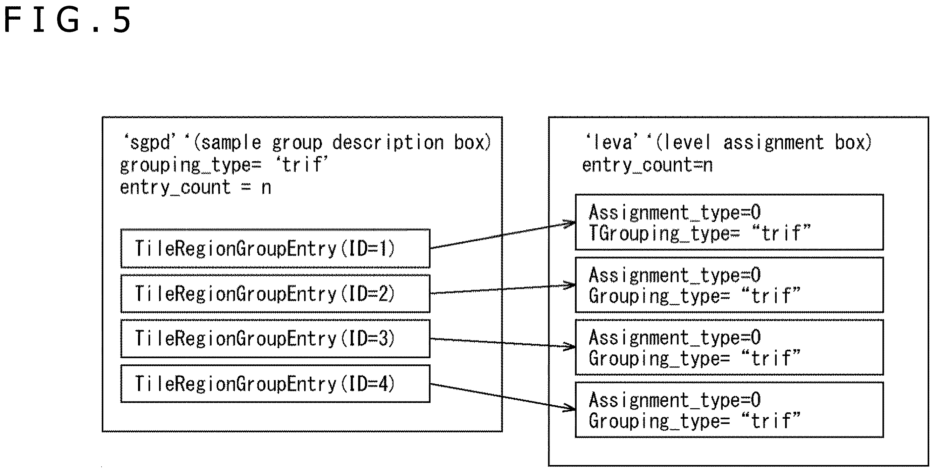

   FIG. 5 is a diagram depicting an example of an sgpd box and an leva box.
[FIG. 6]

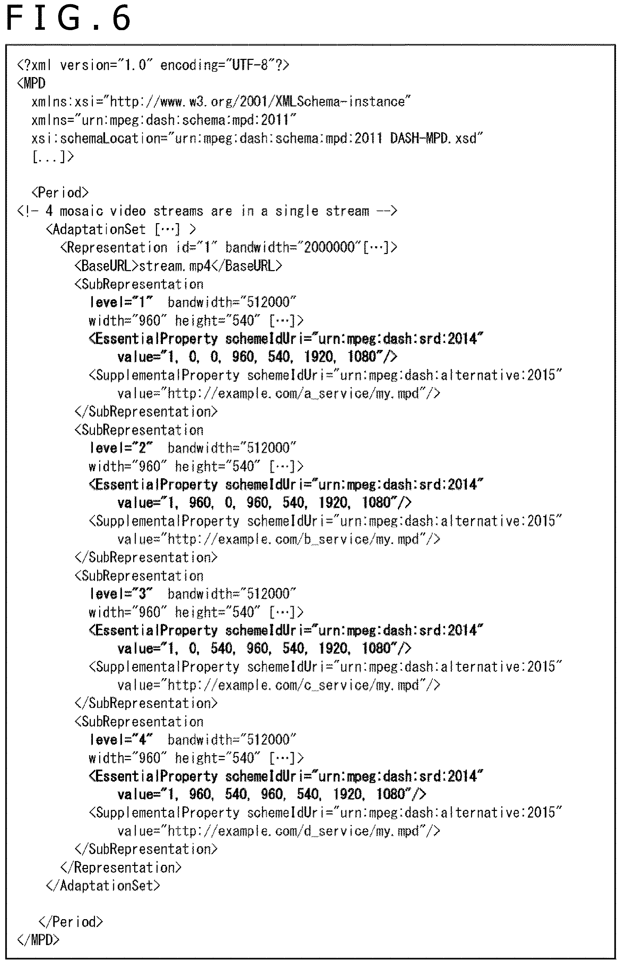

   FIG. 6 is a diagram depicting a first example of an MPD file.
[FIG. 7]

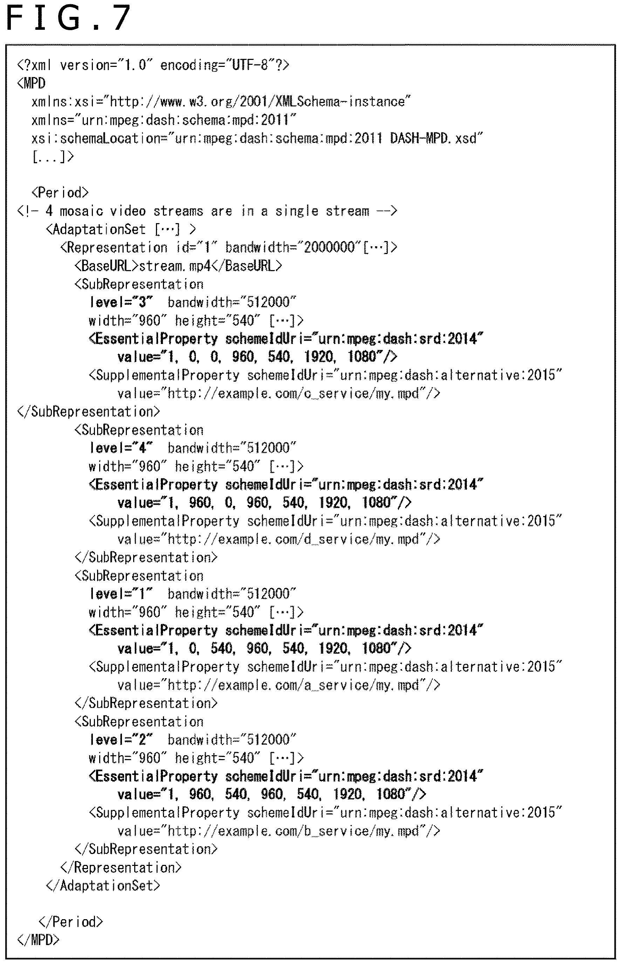

   FIG. 7 is a diagram depicting a second example of an MPD file.
[FIG. 8]

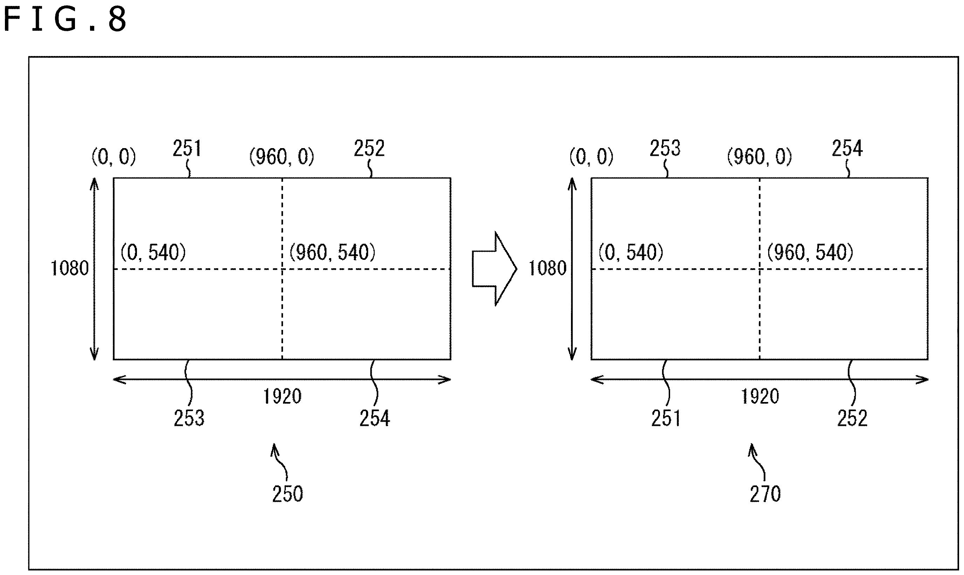

   FIG. 8 is a diagram depicting an example of a screen where thumbnail images are placed.
[FIG. 9]

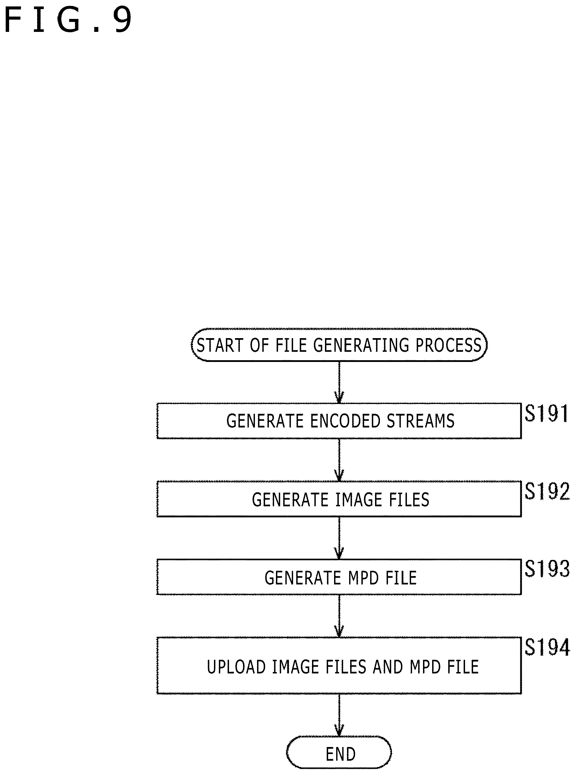

   FIG. 9 is a flowchart illustrative of a file generating process of the file generating apparatus depicted in FIG. 2.
[FIG. 10]

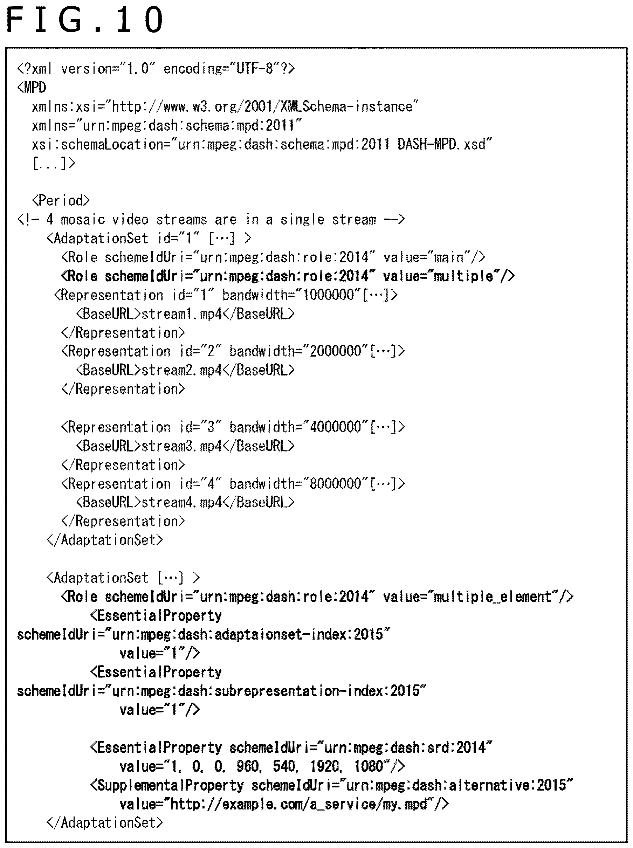

   FIG. 10 is a diagram depicting a third example of an MPD file.
[FIG. 11]

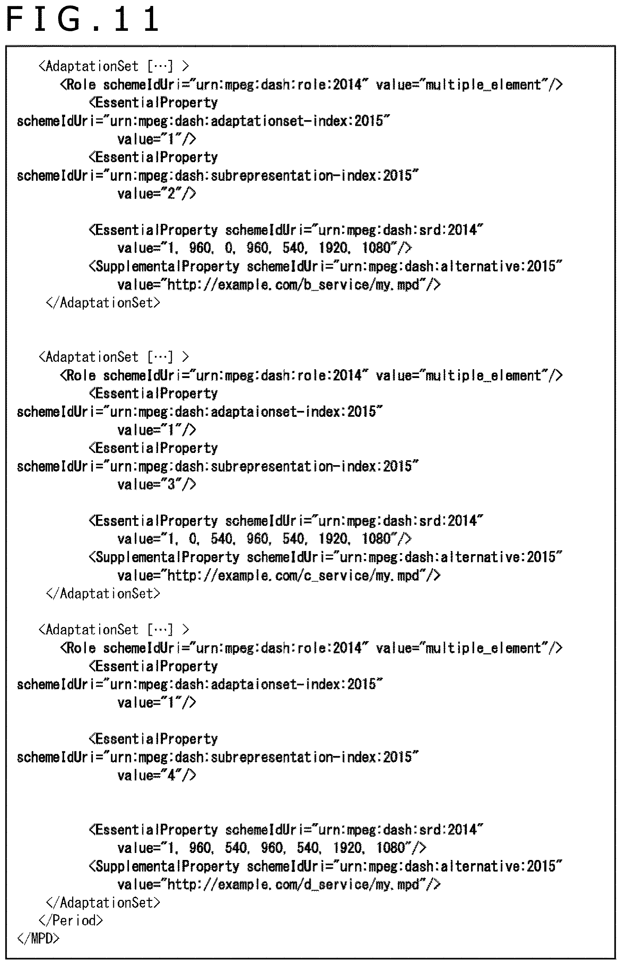

   FIG. 11 is a diagram depicting the third example of the MPD file.
[FIG. 12]

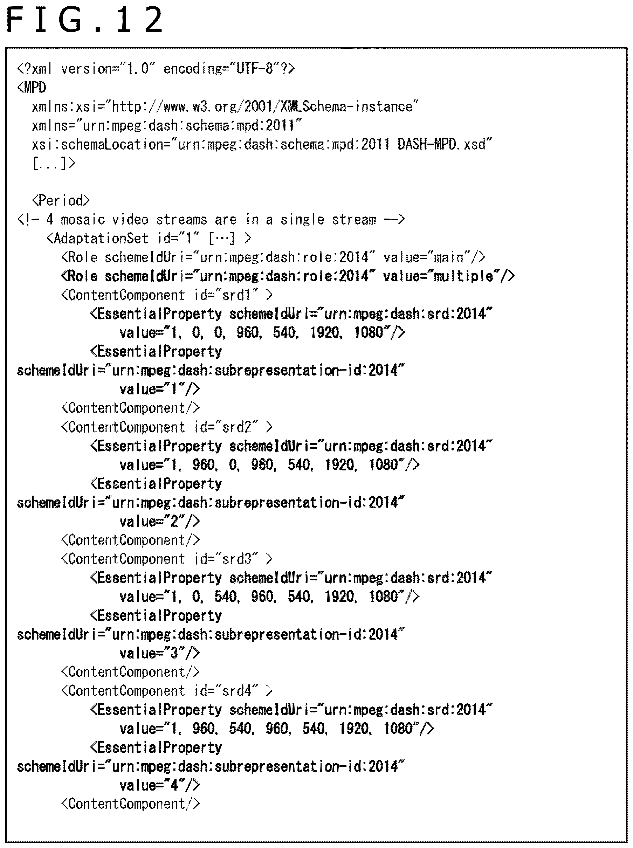

   FIG. 12 is a diagram depicting a fourth example of an MPD file.
[FIG. 13]

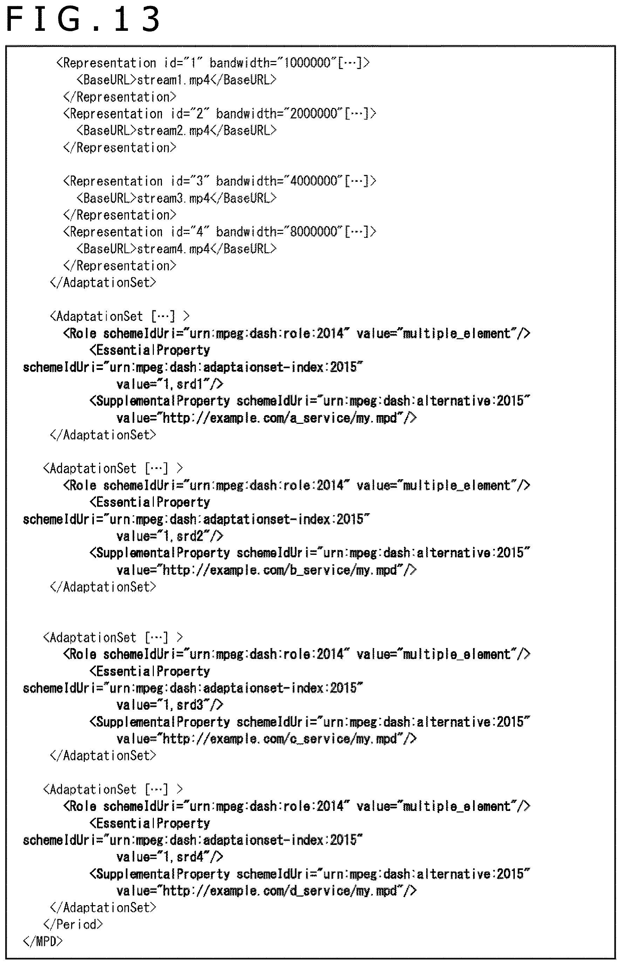

   FIG. 13 is a diagram depicting the fourth example of the MPD file.
[FIG. 14]

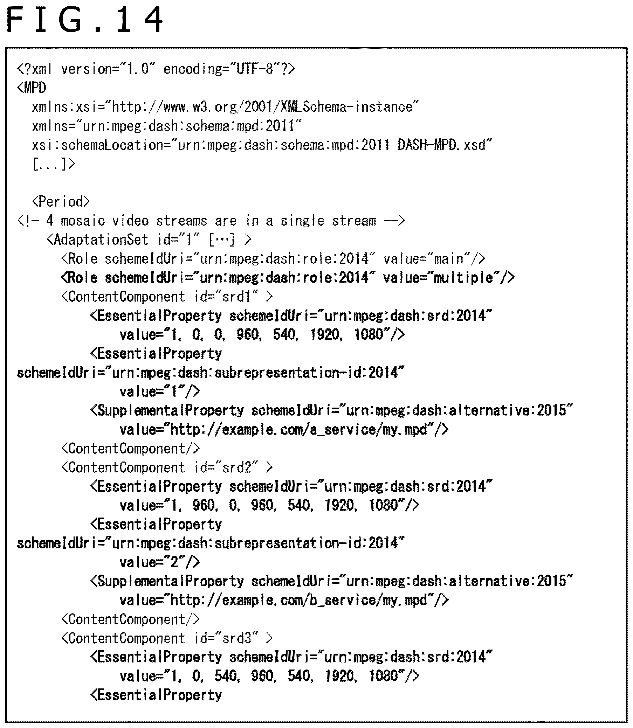

   FIG. 14 is a diagram depicting a fifth example of an MPD file.
[FIG. 15]

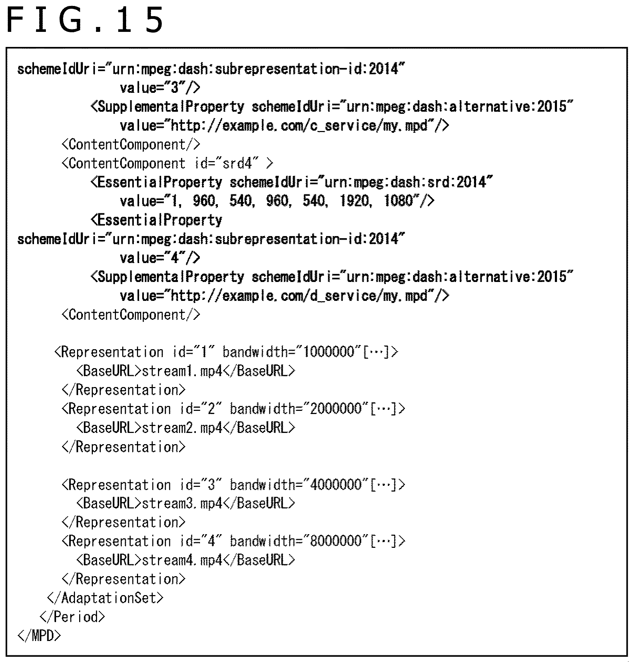

   FIG. 15 is a diagram depicting the fifth example of the MPD file.
[FIG. 16]

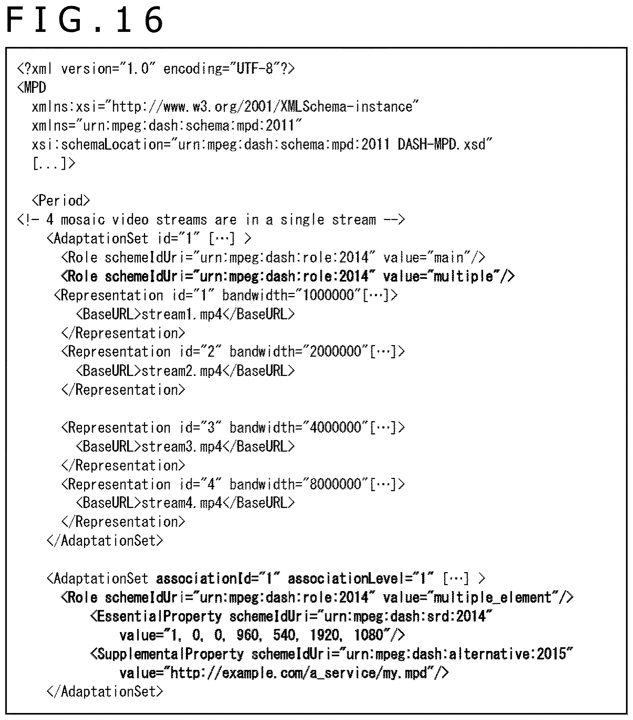

   FIG. 16 is a diagram depicting a sixth example of an MPD file.
[FIG. 17]

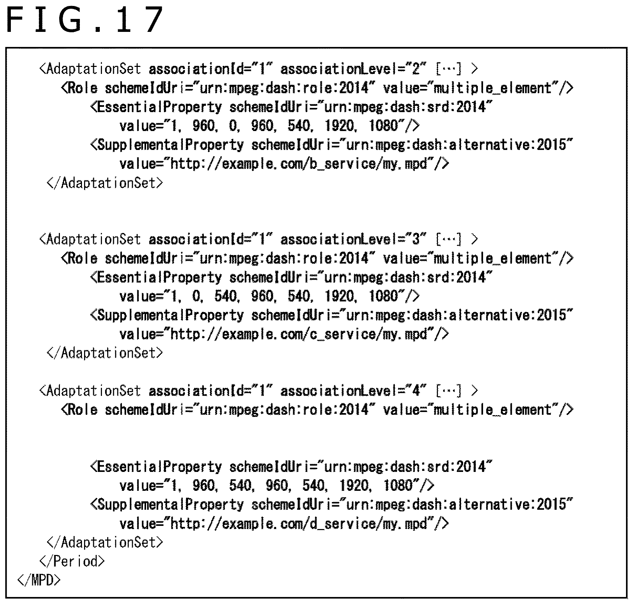

   FIG. 17 is a diagram depicting the sixth example of the MPD file.
[FIG. 18]

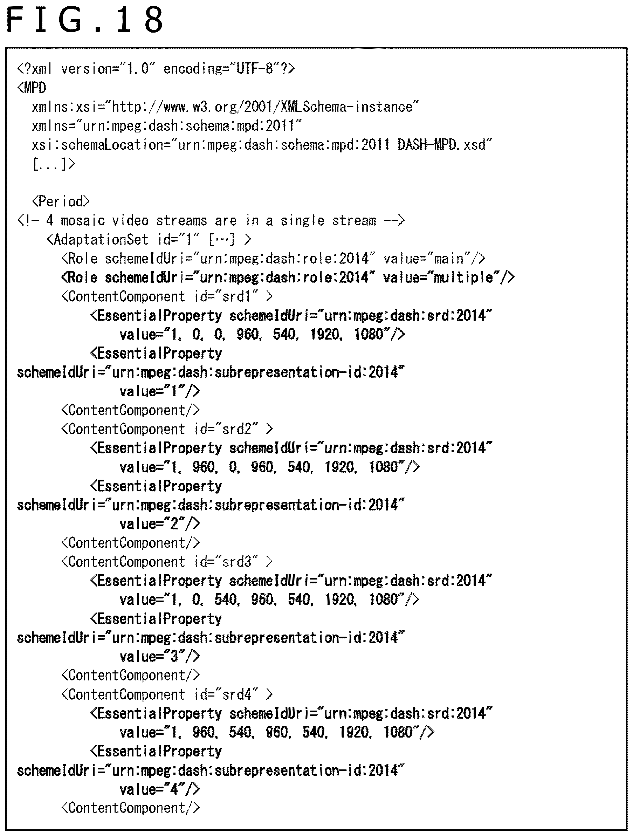

   FIG. 18 is a diagram depicting a seventh example of an MPD file.
[FIG. 19]

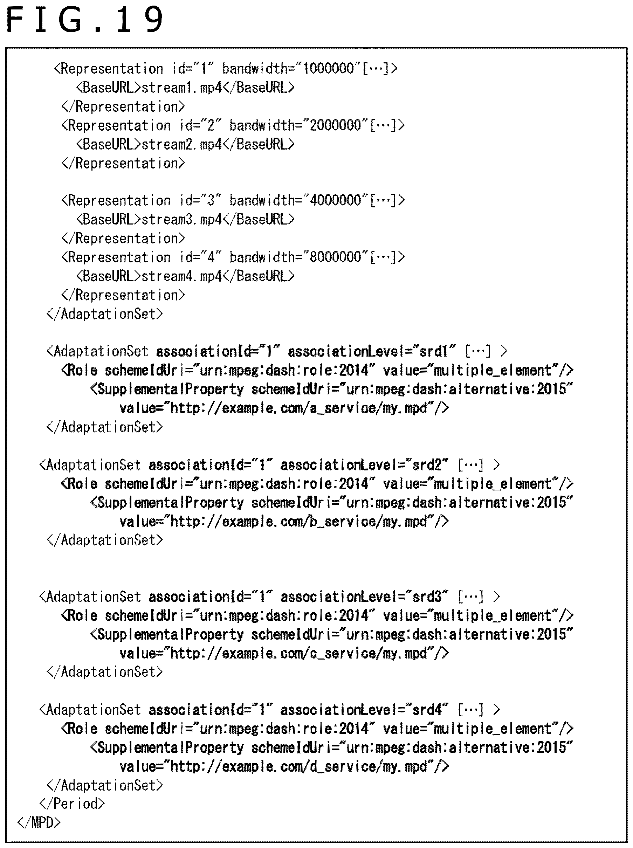

   FIG. 19 is a diagram depicting the seventh example of the MPD file.
[FIG. 20]

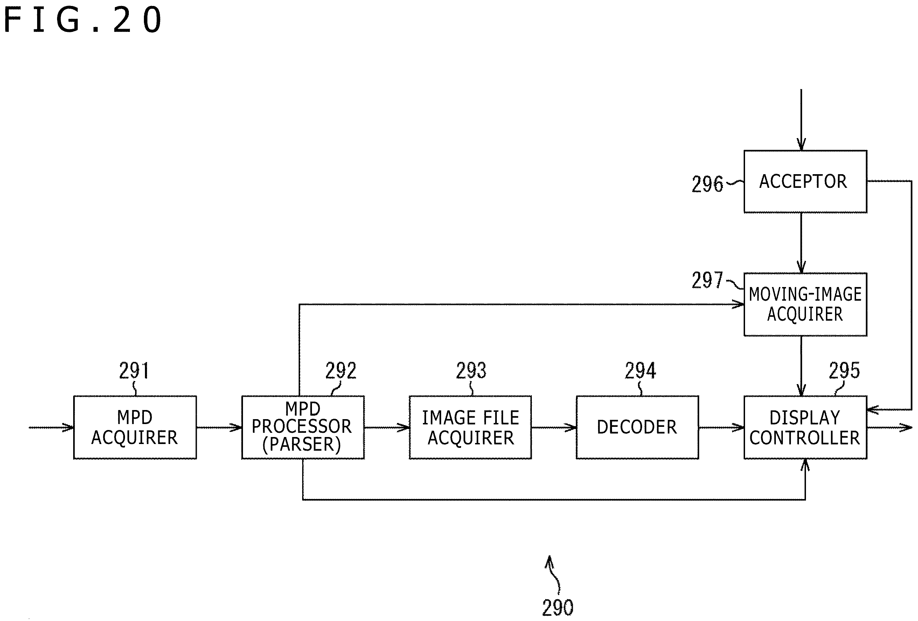

   FIG. 20 is a block diagram depicting a configurational example of a streaming player implemented by a moving-image playback terminal depicted in FIG. 1.
[FIG. 21]

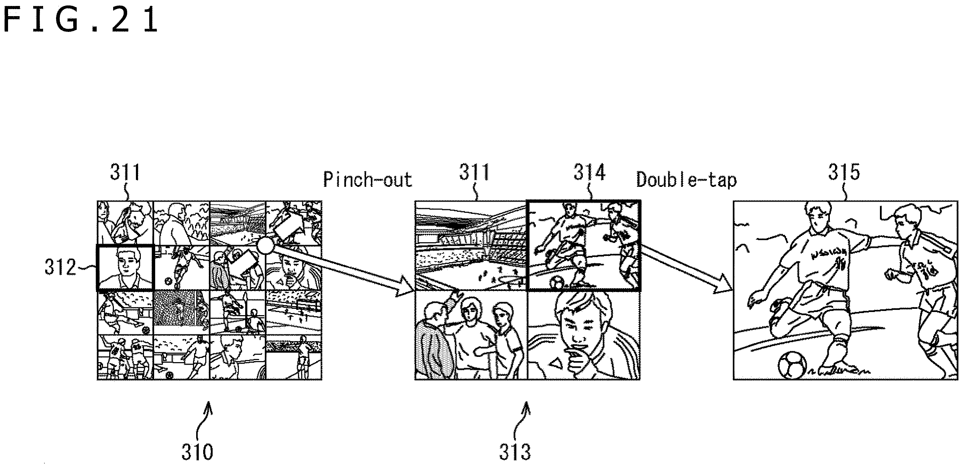

   FIG. 21 is a diagram illustrative of an outline of a playback process of the streaming player depicted in FIG. 20.
[FIG. 22]

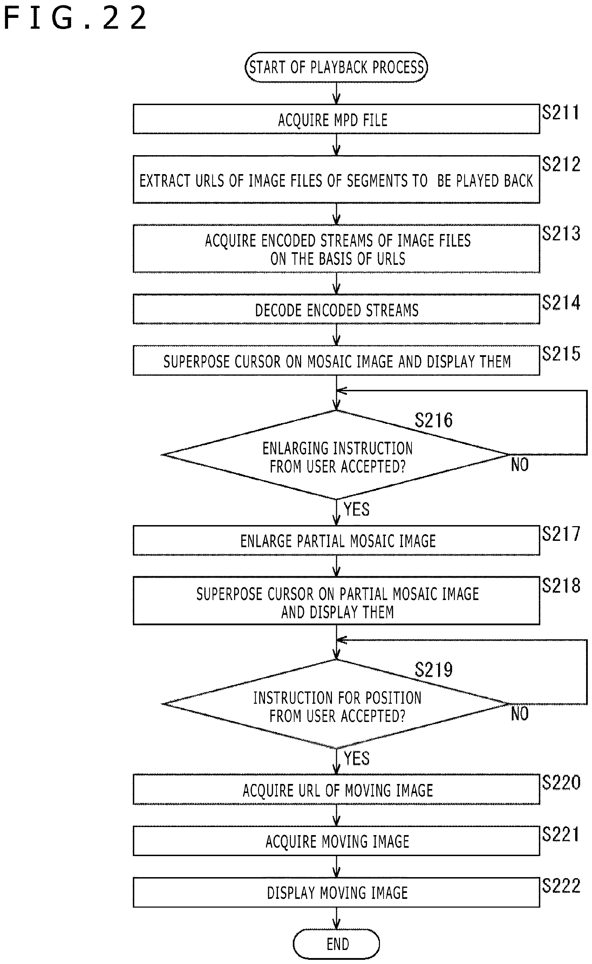

   FIG. 22 is a flowchart illustrative of the playback process of the streaming player depicted in FIG. 20.
[FIG. 23]

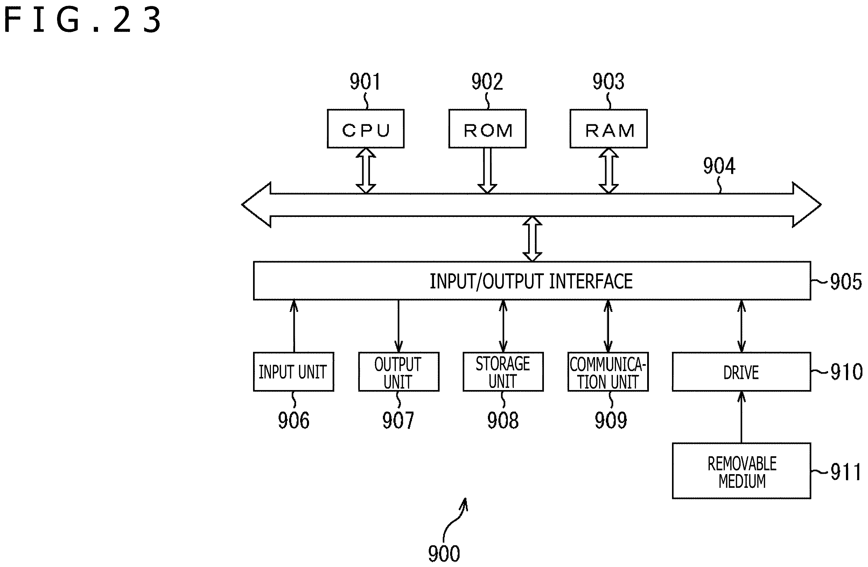

   FIG. 23 is a block diagram depicting a configurational example of the hardware of a computer.

### [Description of Embodiments]

Modes (hereinafter referred to as "embodiments") for carrying out the present disclosure will be described below. The description will be given in the following order:
1. First embodiment: Information processing system (FIGS. 1 through 22)
2. Second embodiment: Computer (FIG. 23)

### <First embodiment>

### (Configurational example of a first embodiment of an information processing system)

FIG. 1 is a block diagram depicting a configurational example of a first embodiment of an information processing system to which the present disclosure is applied.

An information processing system 210 depicted in FIG. 1 includes a Web server 12 connected to a file generating apparatus 211, and a moving-image playback terminal 14, the Web server 12 and the moving-image playback terminal 14 being connected to each other over the Internet 13.

In the information processing system 210, the Web server 12 distributes encoded streams of a mosaic image as an image of a moving-image content to the moving-image playback terminal 14 according to a process equivalent to MPEG-DASH.

The file generating apparatus 211 of the information processing system 210 encodes a mosaic image at a plurality of encoding rates (bit rates) to generate encoded streams. The file generating apparatus 211 generates image files by converting the encoded streams at the encoding rates into files each per time unit called "segment" ranging from several to ten seconds. The file generating apparatus 211 uploads the generated image files to the Web server 12.

The file generating apparatus 211 (setting section) also generates an MPD file (management file) for managing image files, etc. The file generating apparatus 211 uploads the MPD file to the Web server 12.

The Web server 12 stores the image files and the MPD file uploaded from the file generating apparatus 211. In response to a request from the moving-image playback terminal 14, the Web server 12 sends the image files, the MPD file, etc. that have been stored therein to the moving-image playback terminal 14.

The moving-image playback terminal 14 executes software 21 for controlling streaming data (hereinafter referred to as "control software"), moving-image playback software 22, and client software 23 for accessing HTTP (HyperText Transfer Protocol) (hereinafter referred to as "access software"), etc.

The control software 21 is software for controlling data streaming from the Web server 12. Specifically, the control software 21 enables the moving-image playback terminal 14 to acquire the MPD file from the Web server 12.

Based on the MPD file, the control software 21 instructs the access software 23 to send a request for sending encoded streams to be played which are designated by the moving-image playback software 22.

The moving-image playback software 22 is software for playing the encoded streams acquired from the Web server 12. Specifically, the moving-image playback software 22 indicates encoded streams to be played to the control software 21. Furthermore, when the moving-image playback software 22 receives a notification of having started receiving streams from the access software 23, the moving-image playback software 22 decodes the encoded streams received by the moving-image playback terminal 14 into image data. The moving-image playback software 22 combines the decoded image data as required and outputs the combined image data.

The access software 23 is software for controlling communication with the Web server 12 over the Internet 13 using HTTP. Specifically, in response to the instruction from the control software 21, the access software 23 controls the moving-image playback terminal 14 to send a request for sending encoded streams to be played that are included in image files. The access software 23 also controls the moving-image playback terminal 14 to start receiving the encoded streams that are sent from the Web server 12 in response to the request, and supplies a notification of having started receiving streams to the moving-image playback software 22.

### (Configurational example of a file generating apparatus)

FIG. 2 is a block diagram depicting a configurational example of the file generating apparatus 211 depicted in FIG. 1.

The file generating apparatus 211 depicted in FIG. 2 includes an encoding processor 231, an image file generator 232, an MPD generator 233, and a server uploading processor 234.

The encoding processor 231 of the file generating apparatus 211 encodes a mosaic image as an image of a moving-image content at a plurality of encoding rates, thereby generating encoded streams. The encoding processor 231 supplies the encoded streams at the respective encoding rates to the image file generator 232.

The image file generator 232 converts the encoded streams at the respective encoding rates supplied from the encoding processor 231 into files each per segment, thereby generating image files. The image file generator 232 supplies the generated image files to the MPD generator 233.

The MPD generator 233 determines an URL, etc. of the Web server 12 for storing the image files supplied from the image file generator 232. The MPD generator 233 then generates an MPD file containing URLs, etc. of the image files. The MPD generator 233 supplies the generated MPD file and the image files to the server uploading processor 234.

The server uploading processor 234 uploads the image files and the MPD file supplied from the MPD generator 233 to the Web server 12 depicted in FIG. 1.

### (Example of a mosaic image)

FIG. 3 is a diagram depicting an example of a mosaic image.

In the example depicted in FIG. 3, a mosaic image 250 includes an upper left thumbnail image 251, an upper right thumbnail image 252, a lower left thumbnail image 253, and a lower right thumbnail image 254. The mosaic image 250 has a resolution of 2k (1920 pixels × 1080 pixels), and all of the thumbnail images 251 through 254 have a resolution of 960 pixels × 540 pixels.

### (Example of a segment structure of the image file of a mosaic image)

FIG. 4 is a diagram depicting an example of a segment structure of the image file of the mosaic image 250 depicted in FIG. 3.

As depicted in FIG. 4, in the image file of the mosaic image 250, an Initial segment includes an ftyp box and an moov box. The moov box includes an stbl box and an mvex box placed therein. The stbl box includes an sgpd box, etc. placed therein, and the mvex box includes an leva box, etc. placed therein.

A media segment includes one or more subsegments including an sidx box, an ssix box, and pairs of moof and mdat boxes. The sidx box has positional information placed therein which indicates the position of each subsegment in the image file. The ssix box includes positional information of the encoded streams of respective levels placed in the mdat boxes.

A subsegment is provided per desired time length. The mdat boxes have encoded streams placed together therein for a desired time length, and the moof boxes have management information of those encoded streams placed therein.

### (Example of an sgpd box and an leva box)

FIG. 5 is a diagram depicting an example of an sgpd box and an leva box depicted in FIG. 4.

As depicted in FIG. 5, the sgpd box has Tile Region Group Entries successively described therein that indicate the positions on the mosaic image 250 of the thumbnail images 251 through 254 that make up the mosaic image 250.

In the example depicted in FIG. 5, the first Tile Region Group Entry corresponds to the thumbnail image 251 and is (1,0,0,960,540). The second Tile Region Group Entry corresponds to the thumbnail image 252 and is (2,960,0,960,540). The third Tile Region Group Entry corresponds to the thumbnail image 253 and is (3,0,540,960,540). The fourth Tile Region Group Entry corresponds to the thumbnail image 254 and is (4,960,540,960,540). Tile Region Group Entry is standardized by HEVC (High Efficiency Video Coding) Tile Track of HEVC File Format.

The leva box has information of levels corresponding to the respective Tile Region Group Entries described therein successively from the information of the level corresponding to the first Tile Region Group Entry. The level for the thumbnail image 251 is set to 1, the level for the thumbnail image 252 to 2, the level for the thumbnail image 253 to 3, and the level for the thumbnail image 254 to 4. The level functions as an index when part of an encoded stream is designated from an MPD file.

The leva box has assignment_type described therein that indicates whether the object for which a level is to be set is an encoded stream placed on a plurality of tracks or not as information of each level. In the example depicted in FIG. 4, the encoded stream of the mosaic image 250 is placed on one track. Therefore, the assignment_type is set to 0 indicating that the object for which a level is to be set is not an encoded stream placed on a plurality of tracks.

The leva box also has the type of Tile Region Group Entry corresponding to the level described therein as information of each level. In the example depicted in FIG. 4, "trif" representing the type of Tile Region Group Entry described in the sgpd box is described as information of each level. Details of the leva box are described in ISO/IEC 14496-12 ISO base media file format 4th edition, July 2012, for example.

### (First example of an MPD file)

FIG. 6 is a diagram depicting a first example of an MPD file corresponding to the image files of the mosaic image 250 which are generated by the file generating apparatus 211 depicted in FIG. 1.

In the example depicted in FIG. 6, it is assumed that the encoded streams of the mosaic image have one bit rate. This holds true for FIG. 7 to be described later.

As depicted in FIG. 6, in the MPD file, "AdaptationSet" is described per encoded stream. Each "AdaptationSet" has "Representation" described therein, and "Representation" has the URL "stream.mp4" of the image files of the encoded streams of the mosaic image 250 described therein. Since levels are set for the encoded streams of the mosaic image 250, "SubRepresentation" per level can be described in "Representation."

Therefore, the "SubRepresentation" of level "1" has <SupplementalProperty schemeIdUri="urn:mpeg:dash:srd:2014" value= "1,0,0,960,540,1920,1080"/> which represents the SRD of the thumbnail image 251 described therein. The SRD of the thumbnail image 251 is thus set in association with the position on the mosaic image 250 of the thumbnail image 251 indicated by the Tile Region Group Entry corresponding to level "1."

The "SubRepresentation" of level "2" has <SupplementalProperty schemeIdUri="urn:mpeg:dash:srd:2014" value= "1,960,0,960,540,1920,1080"/> which represents the SRD of the thumbnail image 252 described therein. The SRD of the thumbnail image 252 is thus set in association with the position on the mosaic image 250 of the thumbnail image 252 indicated by the Tile Region Group Entry corresponding to level "2."

The "SubRepresentation" of level "3" has <SupplementalProperty schemeIdUri="urn:mpeg:dash:srd:2014" value= "1,0,540,960,540,1920,1080"/> which represents the SRD of the thumbnail image 253 described therein. The SRD of the thumbnail image 253 is thus set in association with the position on the mosaic image 250 of the thumbnail image 253 indicated by the Tile Region Group Entry corresponding to level "3."

The "SubRepresentation" of level "4" has <SupplementalProperty schemeIdUri="urn:mpeg:dash:srd:2014" value= "1,960,540,960,540,1920,1080"/> which represents the SRD of the thumbnail image 254 described therein. The SRD of the thumbnail image 254 is thus set in association with the position on the mosaic image 250 of the thumbnail image 254 indicated by the Tile Region Group Entry corresponding to level "4."

As described above, in the MPD file depicted in FIG. 6, the horizontal and vertical sizes of the mosaic image 250 indicated by Tile Region Group Entry are identical to the horizontal and vertical sizes of the screen indicated by the SRD. The horizontal and vertical coordinates on the mosaic image 250 indicated by Tile Region Group Entry corresponding to each level are identical to the horizontal and vertical positions on the screen indicated by the SRD corresponding to the level. When the MPD file depicted in FIG. 6 is generated, therefore, the screen where the thumbnail images 251 through 254 decoded on the basis of the SRDs are placed is identical to the mosaic image 250.

The "SubRepresentation" of each level also has URLs of moving images corresponding to the thumbnail images 251 through 254 of the level described therein. Specifically, the "SubRepresentation" of level "1" has the URL "http://example.com/a_service/my.mpd" of the moving image corresponding to the thumbnail image 251 described therein. The "SubRepresentation" of level "2" has the URL "http://example.com/b_service/my.mpd" of the moving image corresponding to the thumbnail image 252 described therein.

The "SubRepresentation" of level "3" has the URL "http://example.com/c_service/my.mpd" of the moving image corresponding to the thumbnail image 253 described therein. The "SubRepresentation" of level "4" has the URL "http://example.com/d_service/my.mpd" of the moving image corresponding to the thumbnail image 254 described therein.

### (Second example of an MPD file)

FIG. 7 is a diagram depicting a second example of an MPD file corresponding to the image files of the mosaic image 250 which are generated by the file generating apparatus 211 depicted in FIG. 1.

The MPD file depicted in FIG. 7 is different from the MPD file depicted in FIG. 6 only with respect to an SRD described in the "SubRepresentation" of each level.

Specifically, in the MPD file depicted in FIG. 7, the "SubRepresentation" of level "3" has <SupplementalProperty schemeIdUri="urn:mpeg:dash:srd:2014" value= "1,0,0,960,540,1920,1080"/> which represents the SRD of the thumbnail image 253 described therein.

The "SubRepresentation" of level "4" has <SupplementalProperty schemeIdUri="urn:mpeg:dash:srd:2014" value= "1,960,0,960,540,1920,1080"/> which represents the SRD of the thumbnail image 254 described therein.

The "SubRepresentation" of level "1" has <SupplementalProperty schemeIdUri="urn:mpeg:dash:srd:2014" value= "1,0,540,960,540,1920,1080"/> which represents the SRD of the thumbnail image 251 described therein.

The "SubRepresentation" of level "2" has <SupplementalProperty schemeIdUri="urn:mpeg:dash:srd:2014" value= "1,960,540,960,540,1920,1080"/> which represents the SRD of the thumbnail image 252 described therein.

As described above, in the MPD file depicted in FIG. 7, as with the MPD file depicted in FIG. 6, the horizontal and vertical sizes of the mosaic image 250 indicated by Tile Region Group Entry are identical to the horizontal and vertical sizes of the screen indicated by the SRD.

However, the horizontal and vertical coordinates on the mosaic image 250 indicated by Tile Region Group Entry corresponding to each level are different from the horizontal and vertical positions on the screen indicated by the SRD corresponding to the level. When the MPD file depicted in FIG. 7 is generated, therefore, the screen where the thumbnail images 251 through 254 decoded on the basis of the SRDs are placed is different from the mosaic image 250.

### (Example of a screen where thumbnail images are placed)

FIG. 8 is a diagram depicting an example of a screen where the thumbnail images 251 through 254 decoded on the basis of the SRDs described in the MPD file depicted in FIG. 7 are placed.

The SRD of the thumbnail image 251 described in the MPD file depicted in FIG. 7 indicates that the coordinates of an upper left corner of the thumbnail image 251 on a screen 270 of 1920 pixels × 1080 pixels are (0,540). Therefore, as depicted in FIG. 8, the thumbnail image 251 is placed in a lower left area of the screen 270.

The SRD of the thumbnail image 252 indicates that the coordinates of an upper left corner of the thumbnail image 252 on the screen 270 are (960,540). Therefore, as depicted in FIG. 8, the thumbnail image 252 is placed in a lower right area of the screen 270.

The SRD of the thumbnail image 253 indicates that the coordinates of an upper left corner of the thumbnail image 253 on the screen 270 of 1920 pixels × 1080 pixels are (0,0). Therefore, as depicted in FIG. 8, the thumbnail image 253 is placed in an upper left area of the screen 270.

The SRD of the thumbnail image 254 indicates that the coordinates of an upper left corner of the thumbnail image 254 on the screen 270 are (960,0). Therefore, as depicted in FIG. 8, the thumbnail image 254 is placed in an upper right area of the screen 270.

As described above, with the MPD file depicted in FIG. 7, the layout of the thumbnail images 251 through 254 can be changed from the layout in the mosaic image 250 to be encoded to the layout in the screen 270 at the time they are displayed.

### (Description of a process of the file generating apparatus)

FIG. 9 is a flowchart of a file generating process of the file generating apparatus 211 depicted in FIG. 2.

In step S191 depicted in FIG. 9, the encoding processor 231 encodes a mosaic image as an image of a moving-image content at a plurality of encoding rates, thereby generating encoded streams. The encoding processor 231 supplies the encoded streams at the respective encoding rates to the image file generator 232.

In step S192, the image file generator 232 converts the encoded streams at the respective encoding rates supplied from the encoding processor 231 into files each per segment, thereby generating image files. The image file generator 232 supplies the generated image files to the MPD generator 233.

In step S193, the MPD generator 233 generates an MPD file containing URLs, etc. of the image files. The MPD generator 233 supplies the generated MPD file and the image files to the server uploading processor 234.

In step S194, the server uploading processor 234 uploads the image files and the MPD file supplied from the MPD generator 233 to the Web server 12. The process now comes to an end.

In the MPD files depicted in FIGS. 7 and 8 described above, it is assumed that the encoded streams of the mosaic image have one bit rate. In the event that there are a plurality of bit rates, however, "Representation" depicted in FIG. 7 or FIG. 8 is described for each of the bit rates. Specifically, as many items of "Representation" in which the same SRD and URL, etc. of a moving image are set as the number of bit rates are described in the MPD file. Therefore, the description tends to be redundant.

### (Third example of an MPD file)

FIGS. 10 and 11 are diagrams depicting a third example of an MPD file corresponding to the image files of the mosaic image 250.

In the example depicted in FIGS. 10 and 11, the encoded streams of the mosaic image 250 have four bit rates. This also holds true for FIGS. 12 through 19 to be described later.

In the MPD file depicted in FIGS. 10 and 11, the SRDs and URLs of moving images of the thumbnail images 251 through 254 are set as shared information that is shared between the encoded streams of the mosaic image 250 which have the four bit rates.

Specifically, in the MPD file depicted in FIGS. 10 and 11, there are described "AdaptationSet" corresponding to the encoded streams of the four bit rates and "AdaptationSet" (hereinafter referred to as sharing "AdaptationSet") for sharing information between the encoded streams of the four bit rates.

As depicted in FIG. 10, "AdaptationSet" corresponding to the encoded streams of the four bit rates has <Role schemeIdUri="urn:mpeg:dash:role:2014" value="multiple"/> described therein which indicates that this "AdaptationSet" is "AdaptationSet" corresponding to the encoded streams of the mosaic image 250 that share the information. "AdaptationSet" also has "Representation" corresponding to the encoded streams of the respective bit rates described therein. "Representation" has the URL of the image file of the encoded stream of the corresponding bit rate described therein.

In the example depicted in FIG. 10, "Representation" of the first bit rate has the URL "stream1.mp4" of the image file of the encoded stream of that bit rate described therein. Similarly, "Representation" of the second through fourth bit rates has the URLs "stream2.mp4," "stream3.mp4," "stream4.mp4" of the image files of the encoded streams of those bit rates described therein.

As depicted in FIGS. 10 and 11, "AdaptationSet" for sharing information is set for each thumbnail image. Sharing "AdaptationSet" has <Role schemeIdUri="urn:mpeg:dash:role:2014" value="multiple_element"/> which indicates that this "AdaptationSet" is sharing "AdaptationSet" corresponding to each thumbnail image.

In sharing "AdaptationSet," there is described information (hereinafter referred to as AdaptationSet identifying information) identifying "AdaptationSet" corresponding to the encoded streams where the information described in this sharing "AdaptationSet" is shared, i.e., information identifying "AdaptationSet" where the information described in sharing "AdaptationSet" serves as a segment.

In the example depicted in FIGS. 10 and 11, this AdaptationSet identifying information is represented by <EssentialProperty schemeIdUri="urn:mpeg:dash:adaptationset-index:2015" value="1"/> indicating ID (Identifier) "1" assigned to "AdaptationSet" corresponding to the encoded streams of the four bit rates described above.

Sharing "AdaptationSet" also has information indicating the level set to the corresponding thumbnail image described therein as information identifying the thumbnail image (hereinafter referred to as thumbnail image identifying information). Sharing "AdaptationSet" further has the SRD of the corresponding thumbnail image and the URL of the entity from which the file of the moving image is acquired.

Specifically, in the example depicted in FIGS. 10 and 11, first sharing "AdaptationSet" corresponds to the thumbnail image 251.

Therefore, as depicted in FIF. 10, first sharing "AdaptationSet" has <EssentialProperty schemeIdUri="urn:mpeg:dash:subrepresentation-index:2015" value="1"/> described therein which indicates that the level set for the thumbnail image 251 is 1. First sharing "AdaptationSet" also has <SupplementalProperty schemeIdUri="urn:mpeg:dash:srd:2014" value= "1,0,0,960,540,1920,1080"/> which represents the SRD corresponding to the thumbnail image 251 and the URL "http://example.com/a_service/my.mpd" of the moving image described therein.

As depicted in FIG. 11, second sharing "AdaptationSet" has <EssentialProperty schemeIdUri="urn:mpeg:dash:subrepresentation-index:2015" value="2"/> described therein which indicates that the level set for the thumbnail image 252 is 2. Second sharing "AdaptationSet" also has <SupplementalProperty schemeIdUri="urn:mpeg:dash:srd:2014" value= "1,960,0,960,540,1920,1080"/> which represents the SRD corresponding to the thumbnail image 252 and the URL "http://example.com/b_service/my.mpd" of the moving image corresponding to the thumbnail image 252 described therein.

Third sharing "AdaptationSet" has <EssentialProperty schemeIdUri="urn:mpeg:dash:subrepresentation-index:2015" value="3"/> described therein which indicates that the level set for the thumbnail image 253 is 3. Third sharing "AdaptationSet" also has <SupplementalProperty schemeIdUri="urn:mpeg:dash:srd:2014" value= "1,0,540,960,540,1920,1080"/> which represents the SRD corresponding to the thumbnail image 253 and the URL "http://example.com/c_service/my.mpd" of the moving image corresponding to the thumbnail image 253 described therein.

Fourth sharing "AdaptationSet" has <EssentialProperty schemeIdUri="urn:mpeg:dash:subrepresentation-index:2015" value="4"/> described therein which indicates that the level set for the thumbnail image 254 is 4. Fourth sharing "AdaptationSet" also has <SupplementalProperty schemeIdUri="urn:mpeg:dash:srd:2014" value= "1,960,540,960,540,1920,1080"/> which represents the SRD corresponding to the thumbnail image 254 and the URL "http://example.com/d_service/my.mpd" of the moving image corresponding to the thumbnail image 254 described therein.

In the MPD file depicted in FIGS. 10 and 11, as described above, the description is free of redundancy because the SRDs and the URLs of the moving images of the thumbnail images 251 through 254 are set as shared information. When the moving-image playback terminal 14 acquires the MPD file depicted in FIGS. 10 and 11, it recognizes from "value=multiple" that there is shared information, and extracts the shared information from sharing "AdaptationSet" where the ID of "AdaptationSet" is described.

The AdaptationSet identifying information refers to information that identifies "AdaptationSet" where the information described in sharing "AdaptationSet" is inherently set. The thumbnail image identifying information refers to information that identifies "SubRepresentation" where the information described in sharing "AdaptationSet" is inherently set.

Consequently, a value as information for identifying an element whose name is element_name, where the information described in sharing "AdaptationSet" is inherently set, can be defined as being described as <EssentialProperty schemeIdUri="urn:mpeg:dash:adaptationset-reference:2015" value="element_name,value"/>, and the AdaptationSet identifying information and the thumbnail image identifying information can be described by a common description method.

In this case, the AdaptationSet identifying information is described as <EssentialProperty schemeIdUri="urn:mpeg:dash:adaptationset-reference:2015" value="AdaptationSet,id"/>, and the thumbnail image identifying information is described as <EssentialProperty schemeIdUri="urn:mpeg:dash:adaptationset-reference:2015" value="SubRepresentation,level"/>.

### (Fourth example of an MPD file)

FIGS. 12 and 13 are diagrams depicting a fourth example of an MPD file corresponding to the image files of the mosaic image 250.

The makeup of the MPD file depicted in FIGS. 12 and 13 is different from the makeup of the MPD file depicted in FIGS. 10 and 11 primarily in that the SRDs of the respective thumbnail images 251 through 254 are described in "AdaptationSet" corresponding to the encoded streams of the four bit rates, rather than in sharing "AdaptationSet."

Specifically, in the MPD file depicted in FIGS. 12 and 13, as depicted in FIG. 12, "AdaptationSet" corresponding to the encoded streams of the four bit rates has four items of "ContentComponent" that are descriptive of shared information shared by the encoded streams corresponding to all items of "Representation" in that "AdaptationSet."

Each item of "CotentComponent" corresponds to one of the levels set for the thumbnail images 251 through 254. Each item of "CotentComponent" has the corresponding SRD described as shared information therein and also the thumbnail image identifying information described therein.

As depicted in FIG. 13, sharing "AdaptationSet" is devoid of SRDs and thumbnail image identifying information, and has, instead of AdaptationSet identifying information, information (hereinafter referred to as ContentComponent identifying information) identifying "ContentComponent" of "AdapationSet" corresponding to the encoded streams where the information described in sharing "AdaptationSet" is shared.

In the example depicted in FIGS. 12 and 13, the CotentComponent identifying information described in sharing "AdaptationSet" corresponding to the thumbnail image 251 is represented by <EssentialProperty schemeIdUri="urn:mpeg:dash:adaptationset-index:2015" value="1,srd1"/> which indicates ID "1" assigned to "AdaptationSet" corresponding to the encoded streams of the four bit rates and ID "srd1" assigned to "ContentComponent" where the thumbnail image identifying information of the thumbnail image 251 is described.

The CotentComponent identifying information described in sharing "AdaptationSet" corresponding to the thumbnail image 252 is represented by <EssentialProperty schemeIdUri="urn:mpeg:dash:adaptationset-index:2015" value="1,srd2"/> which indicates ID "srd2" assigned to "ContentComponent" where the thumbnail image identifying information of the thumbnail image 252 is described.

The CotentComponent identifying information described in sharing "AdaptationSet" corresponding to the thumbnail image 253 is represented by <EssentialProperty schemeIdUri="urn:mpeg:dash:adaptationset-index:2015" value="1,srd3"/> which indicates ID "srd3" assigned to "ContentComponent" where the thumbnail image identifying information of the thumbnail image 253 is described.

The CotentComponent identifying information described in sharing "AdaptationSet" corresponding to the thumbnail image 254 is represented by <EssentialProperty schemeIdUri="urn:mpeg:dash:adaptationset-index:2015" value="1,srd4"/> which indicates ID "srd4" assigned to "ContentComponent" where the thumbnail image identifying information of the thumbnail image 254 is described.

In the MPD file depicted in FIGS. 12 and 13, as described above, the description is free of redundancy because the SRDs and the URLs of the moving images of the thumbnail images 251 through 254 are set as shared information.

When the moving-image playback terminal 14 acquires the MPD file depicted in FIGS. 12 and 13, it recognizes from "value=multiple" that there is shared information, and extracts the shared information from sharing "AdaptationSet" where the ID of "AdaptationSet" with "value=multiple" set therein is described. The moving-image playback terminal 14 also extracts the shared information from "ContentComponent" described in "AdaptationSet" with "value=multiple" set therein.

In the MPD file depicted in FIGS. 12 and 13, inasmuch as the URLs of the moving images are described in sharing "AdaptationSet," no SRD is described. Consequently, the MPD file is compatible with an MPD file where the URLs of moving images are described in sharing "AdaptationSet."

### (Fifth example of an MPD file)

FIGS. 14 and 15 are diagrams depicting a fifth example of an MPD file corresponding to the image files of the mosaic image 250.

The makeup of the MPD file depicted in FIGS. 14 and 15 is different from the makeup of the MPD file depicted in FIGS. 12 and 13 primarily in that the URLs of the moving images corresponding to the respective thumbnail images 251 through 254 are described in "AdaptationSet" corresponding to the encoded streams of the four bit rates, rather than in sharing "AdaptationSet."

Specifically, in the MPD file depicted in FIGS. 14 and 15, as depicted in FIG. 14, the URLs of the corresponding moving images are described in "ContentComponent" provided in "AdaptationSet" corresponding to the encoded streams of the four bit rates. Sharing "AdaptationSet" is not described.

In the MPD file depicted in FIGS. 14 and 15, as described above, the description is free of redundancy because the SRDs and the URLs of the moving images of the thumbnail images 251 through 254 are set as shared information.

When the moving-image playback terminal 14 acquires the MPD file depicted in FIGS. 14 and 15, it recognizes from "value=multiple" that there is shared information, and extracts the shared information from "ContentComponent" described in "AdaptationSet" with "value=multiple" set therein.

In the above description, the thumbnail image identifying information, the AdaptationSet identifying information, and the ContentComponent identifying information are described using Essential Property. However, they may be described as elements of "AdaptationSet."

In this case, the MPD file depicted in FIGS. 10 and 11 becomes an MPD file depicted in FIGS. 16 and 17. Specifically, as depicted in FIGS. 16 and 17, the AdaptationSet identifying information is described as "associationID" of sharing "AdaptationSet," and the thumbnail image identifying information is described as "associationLevel" of sharing "AdaptationSet."

Moreover, the MPD file depicted in FIGS. 12 and 13 becomes an MPD file depicted in FIGS. 18 and 19. Specifically, as depicted in FIGS. 18 and 19, of the ContentComponent identifying information, information identifying "AdaptationSet" corresponding to the encoded streams where the information described in sharing "AdaptationSet" is shared is described as "associationID" of that sharing "AdaptationSet." Information identifying "ContentComponent" of "AdaptationSet" corresponding to the encoded streams where the information described in sharing "AdaptationSet" is shared is described as "associationLevel" of that sharing "AdaptationSet."
"associationType" indicating the type of "AdaptationSet" may be described as an element of "AdaptationSet." In this case, information indicating that "AdaptationSet" is "AdaptationSet" corresponding to the encoded streams of the mosaic image 250 that shares information, and information indicating that "AdaptationSet" is sharing "AdaptationSet" corresponding to each thumbnail image are described as associationType. For example, associationType is set to "subs" if "AdaptationSet" is "AdaptationSet" corresponding to the encoded streams of the mosaic image 250 that shares information.

In the MPD files depicted in FIGS. 6, 7, and 10 through 19, the levels have no dependent relationship therebetween at the time of decoding and displaying. However, if the levels have a dependent relationship therebetween, then <EssentialProperty schemeIdUri="urn:mpeg:dash:subrepresentation-dependency:2015" value="level"/> indicating the dependent relationship between the levels may be described. For example, if level 2 is dependent on level 1, then <EssentialProperty schemeIdUri="urn:mpeg:dash:subrepresentation-dependency:2015" value="1"/> is described in "ContentComponent" where ID "srd2" corresponding to level 2 is assigned in the MPD file depicted in FIGS. 12 and 13.

### (Functional configurational example of a moving-image playback terminal)

FIG. 20 is a block diagram depicting a configurational example of a streaming player implemented by the moving-image playback terminal 14 depicted in FIG. 1 when it executes the control software 21, the moving-image playback software 22, and the access software 23.

The streaming player 290 depicted in FIG. 20 includes an MPD acquirer 291, an MPD processor 292, an image file acquirer 293, a decoder 294, a display controller 295, an acceptor 296, and a moving-image acquirer 297.

The MPD acquirer 291 of the streaming player 290 acquires an MPD file from the Web server 12, and supplies the MPD file to the MPD processor 292.

The MPD processor 292 extracts information such as URLs of the image files of segments to be played back from the MPD file supplied from the MPD acquirer 291, and supplies the extracted information to the image file acquirer 293. The MPD processor 292 also supplies the MPD file to the moving-image acquirer 297. The MPD processor 292 extracts the SRDs of the divided images of a mosaic image of the segments to be played back from the MPD file, and supplies the extracted SRDs to the display controller 295.

The image file acquirer 293 requests the Web server 12 for the encoded streams of the image files that are specified by the URLs supplied from the MPD processor 292, and acquires the encoded streams. The image file acquirer 293 supplies the acquired encoded streams to the decoder 294.

The decoder 294 decodes the encoded streams supplied from the image file acquirer 293. The decoder 294 supplies a mosaic image obtained as a result of the decoding process to the display controller 295.

The display controller 295 (allocator) places the divided images of the mosaic image supplied from the decoder 294 on the screen on the basis of the SRDs supplied from the MPD processor 292. The display controller 295 superposes a cursor or the like on the screen where the divided images are placed, and supplies the divided images with the superposed cursor to a display device, not depicted, which displays them.

In response to an instruction to enlarge a given region of the screen supplied from the acceptor 296, the display controller 295 enlarges the size of a partial mosaic image, of the screen where the mosaic image is placed, that includes only a thumbnail image contained in the region, up to the size of the screen. The display controller 295 superposes a cursor or the like on the given thumbnail image in the screen where the enlarged partial mosaic image is placed, and supplies the thumbnail image with the superposed cursor to the display device, not depicted, which displays them.

The display controller 295 supplies a moving image, supplied from the moving-image acquirer 297, that corresponds to one of the thumbnail images being displayed, to the display device, not depicted, which displays the supplied moving image.

The acceptor 296 accepts an instruction from the user, etc. and supplies the instruction to the moving-image acquirer 297 or the display controller 295.

In response to an instruction about a given position supplied from the acceptor 296, the moving-image acquirer 297 acquires the URL of a moving image corresponding to the position from the MPD file supplied from the MPD processor 292. The moving-image acquirer 297 acquires a moving image from the Web server 12 or the like on the basis of the acquired URL, and supplies the acquired moving image to the display controller 295.

### (Outline of a playback process)

FIG. 21 is a diagram illustrative of an outline of a playback process of the streaming player 290.

As depicted in a left section of FIG. 21, the display controller 295 puts a cursor 312 on a given thumbnail image 311 of 4 × 4 thumbnail images 311 that make up a mosaic image 310 placed in the screen, and controls the display device, not depicted, to display the given thumbnail image 311.

At this time, the user gives an instruction to enlarge a desired region while seeing the screen of the mosaic image 310 with the cursor 312 superposed thereon. In the example depicted in FIG. 21, the user gives an instruction to enlarge the region of 2 × 2 thumbnail images 311 in an upper right area of the screen where the mosaic image 310 is placed.

In response to the enlarging instruction, the display controller 295 enlarges the size of a partial mosaic image 313 which is made up of only the 2 × 2 thumbnail images 311 in the upper right area, of the screen where the mosaic image 310 is placed, to the size of the screen. Then, as depicted in a central section of FIG. 21, the display controller 295 superposes a cursor 314 on a given thumbnail image 311 in the screen where the enlarged partial mosaic image 313 is placed, and controls the display device, not depicted, to display the thumbnail image 311.

At this time, the user moves the cursor 314 to a desired thumbnail image 311 and performs an action such as a double tap thereon, indicating a position for the cursor 314. In the example depicted in FIG. 21, the user indicates the position of an upper right thumbnail image 311.

In response to the user's instruction, the moving-image acquirer 297 acquires the URL of the moving image corresponding to the SRD that indicates the position on the screen of the mosaic image 310 corresponding to the position on the indicated partial mosaic image 313, from the MPD file, as the URL of a moving image corresponding to the indicated position. Then, based on the acquired URL, the moving-image acquirer 297 acquires a moving image 315 from the Web server 12 or the like, and supplies the acquired moving image 315 to the display controller 295. As depicted in a right section of FIG. 21, the display controller 295 controls the display device, not depicted, to display the moving image 315.

### (Description of a process of the moving-image playback terminal)

FIG. 22 is a flowchart of a playback process of the streaming player 290 depicted in FIG. 20.

In step S211 depicted in FIG. 22, the MPD acquirer 291 of the streaming player 290 acquires the MPD file from the Web server 12 and supplies the acquired MPD file to the MPD processor 292.

In step S212, the MPD processor 292 extracts information such as URLs of the image files of segments to be played back from the MPD file supplied from the MPD acquirer 291, and supplies the extracted information to the image file acquirer 293. The MPD processor 292 also supplies the MPD file to the moving-image acquirer 297. The MPD processor 292 extracts the SRDs of the divided images of a mosaic image of the segments to be played back from the MPD file, and supplies the extracted SRDs to the display controller 295.

In step S213, the image file acquirer 293 requests the Web server 12 for the encoded streams of the image files that are specified by the URLs supplied from the MPD processor 292, and acquires the encoded streams. The image file acquirer 293 supplies the acquired encoded streams to the decoder 294.

In step S214, the decoder 294 decodes the encoded streams supplied from the image file acquirer 293. The decoder 294 supplies a mosaic image obtained as a result of the decoding process to the display controller 295.

In step S215, the display controller 295 places the divided images of the mosaic image from the decoder 294 on the screen on the basis of the SRDs from the MPD processor 292, superposes a cursor or the like on the screen, and supplies the divided images with the superposed cursor to the display device, not depicted, which displays them.

In step S216, the acceptor 296 determines whether it has accepted an instruction to enlarge a given region of the screen from the user or not. If the acceptor 296 decides that it has not accepted an instruction to enlarge a given region of the screen in step S216, then the acceptor 296 waits until it accepts an instruction to enlarge a given region of the screen.

If the acceptor 296 decides that it has accepted an instruction to enlarge a given region of the screen in step S216, then the acceptor 296 supplies the enlarging instruction to the display controller 295. In step S217, in response to the enlarging instruction supplied from the acceptor 296, the display controller 295 enlarges the size of a partial mosaic image, of the screen where the mosaic image is placed, that includes only a thumbnail image contained in the region instructed to be enlarged, up to the size of the screen.

In step S218, the display controller 295 superposes a cursor or the like on a given thumbnail image in the screen where the enlarged partial mosaic image is placed, supplies the thumbnail image with the superposed cursor to the display device, not depicted, which displays them. At this time, the user moves the cursor to a desired thumbnail image and performs an action such as a double tap thereon, indicating a position for the cursor on the screen.

In step S219, the acceptor 296 determines whether it has accepted an instruction for a position on the screen from the user or not. If the acceptor 296 decides that it has not accepted an instruction for a position on the screen in step S219, then the acceptor 296 waits until it accepts an instruction for a position on the screen.

If the acceptor 296 decides that it has accepted an instruction for a position on the screen in step S219, then the acceptor 296 supplies the instruction to the moving-image acquirer 297. In step S220, in response to the instruction from the acceptor 296, the moving-image acquirer 297 acquires the URL of a moving image corresponding to the indicated position from the MPD file supplied from the MPD processor 292.

In step S221, the moving-image acquirer 297 acquires a moving image from the Web server 12 or the like on the basis of the acquired URL, and supplies the acquired moving image to the display controller 295.

In step S222, the display controller 295 supplies the moving image supplied from the moving-image acquirer 297 to the display device, not depicted, which displays it. The process is now ended.

In the first embodiment, a partial mosaic image is displayed after a mosaic image has been displayed, and a position on the partial mosaic image is indicated by the user. However, a partial mosaic image may not be displayed, and a position on the mosaic image may be indicated directly by user.

In the above description, the URLs of moving images (original versions) corresponding to thumbnail images are described in association with the SRDs of the respective thumbnail images in the MPD file. However, information described in association with the SRDs of the respective thumbnail images is not limited to such URLs.

For example, information of image files superposed when thumbnail images are displayed in a picture-in-picture mode may be described in association with the SRDs of the respective thumbnail images. In this case, for example, <SupplementalProperty schemeIdUri="urn:mpeg:dash:srd-composition:2014" value= "source_url"/> is described as the information of image files superposed when thumbnail images are displayed in a picture-in-picture mode. "source_url" represents information for identifying AdaptationSet in an external MPD file or an internal MPD file that manages image files superposed on thumbnail images.

Alternatively, information indicating the type (meaning) of thumbnail images may be described in association with the SRDs of the respective thumbnail images. In this case, for example, <SupplementalProperty schemeIdUri="urn:mpeg:dash:srd-role:2014" value= "pinp"/> is described as the information indicating that the thumbnail images are displayed in a picture-in-picture mode. The moving-image playback terminal now can present the user with characters or icons that the thumbnail images are images displayed in a picture-in-picture mode.

Furthermore, all of the URLs of moving images corresponding to thumbnail images, information of image files superposed when thumbnail images are displayed in a picture-in-picture mode, and information indicating the type of thumbnail images may be described in association with the SRDs of the respective thumbnail images. In this case, characters or icons indicating that the thumbnail images are images displayed in a picture-in-picture mode are displayed with respect to the respective thumbnail images, and given images are displayed in a picture-in-picture mode such that they are superposed on the respective thumbnail images. When the user indicates a position on the mosaic image, a moving image corresponding to the thumbnail image displayed at the indicated position is played back.

The URLs of moving images corresponding to thumbnail images, the information of image files superposed when thumbnail images are displayed in a picture-in-picture mode, and the information indicating the type of thumbnail images may be described in another property than an SRD, or may be described as flags in the property of an expanded SRD.

### <Second embodiment>

### (Description of a computer to which the present disclosure is applied)

The above sequence of processes may be hardware-implemented or software-implemented. If the sequence of processes is software-implemented, then software programs are installed in a computer. The computer may be a computer incorporated in dedicated hardware or a general-purpose personal computer which is capable of performing various functions by installing various programs.

FIG. 23 is a block diagram depicting a configurational example of the hardware of a computer that executes the above sequence of processes based on programs.

A computer 900 includes a CPU (Central Processing Unit) 901, a ROM (Read Only Memory) 902, and a RAM (Random Access Memory) 903 that are connected to each other by a bus 904.

An input/output interface 905 is connected to the bus 904. To the input/output interface 905, there are connected an input unit 906, an output unit 907, a storage unit 908, a communication unit 909, and a drive 910.

The input unit 906 includes a keyboard, a mouse, and a microphone. The output unit 907 includes a display and a speaker. The storage unit 908 includes a hard disk and a non-volatile memory. The communication unit 909 includes a network interface. The drive 910 works on a removable medium 911 such as a magnetic disk, an optical disk, a magneto-optical disk, or a semiconductor memory.

In the computer 900 thus constructed, the CPU 901 loads programs stored in the storage unit 908, for example, through the input/output interface 905 and the bus 904 into the RAM 903 and executes the programs to perform the sequence of processes described above.

The programs run by the computer 900 (the CPU 901) can be recorded on and provided by the removable medium 911 as a package medium or the like, for example. The programs can also be provided through a wired or wireless transmission medium such as a local area network, the Internet, or a digital satellite broadcast.

In the computer 900, the programs can be installed in the storage unit 908 through the input/output interface 905 when the removable medium 911 is inserted into the drive 910. The programs can also be received by the communication unit 909 through a wired or wireless transmission medium and installed in the storage unit 908. The programs can alternatively be pre-installed in the ROM 902 or the storage unit 908.

The programs that are executed by the computer 900 may be programs that are carried out in chronological order in the sequence described above in the present specification, or may be programs that are carried out parallel to each other or at necessary timings as when called for.

In the present specification, the term "system" means a collection of components (apparatus, modules (parts), or the like), and it does not matter whether all the components are present in the same housing or not. Therefore, both a plurality of apparatus housed in separate housings and connected by a network, and a single apparatus having a plurality of modules housed in one housing may be referred to as a system.

The advantages referred to above in the present specification are only illustrative, but not limitative, do not preclude other advantages.

The embodiments of the present disclosure are not limited to the above embodiments, and various changes may be made therein without departing from the scope of the present disclosure.

The present disclosure may be presented in the following configurations:

(1) An information processing apparatus including:
   a setting section that sets first AdaptationSet including a plurality of items of Representation corresponding to encoded streams having predetermined bit rates and second AdaptationSet not including Representation.
(2) The information processing apparatus according to (1), in which the setting section adds information indicating that the first AdaptationSet and the second AdaptationSet are related to each other to the second AdaptationSet.
(3) The information processing apparatus according to (1) or (2), in which the setting section sets the first AdaptationSet and the second AdaptationSet in a management file that manages files of the encoded streams.
(4) The information processing apparatus according to any one of (1) through (3), in which the encoded streams corresponding to the items of Representation included in the first AdaptationSet are encoded streams of one image that have different bit rates, and
   the setting section adds respective positions on a screen of a plurality of divided images that make up the image to the second AdaptationSet.
(5) The information processing apparatus according to (4), in which the setting section adds an entity from which files corresponding to the respective divided images are acquired to the second AdaptationSet.
(6) The information processing apparatus according to (4), in which the setting section adds the respective positions on the screen of the divided images to respective different items of information of the second AdaptationSet.
(7) The information processing apparatus according to (6), in which the setting section adds an entity from which files corresponding to the respective divided images are acquired to the second AdaptationSet that includes the positions on the screen of the divided images.
(8) The information processing apparatus according to (6) or (7), in which the setting section adds information identifying the divided images corresponding to the second AdaptationSet to the second AdaptationSet.
(9) The information processing apparatus according to any one of (1) through (8), in which the setting section adds information representing the first AdaptationSet to the first AdaptationSet, and adds information representing the second AdaptationSet to the second AdaptationSet.
(10) The information processing apparatus according to any one of (1) through (3), in which the encoded streams corresponding to the items of Representation included in the first AdaptationSet are encoded streams of one image that have different bit rates, and
   the setting section adds respective positions on a screen of a plurality of divided images that make up the image as information of CotentComponent to the first AdaptationSet.
(11) The information processing apparatus according to (10), in which the setting section adds an entity from which files corresponding to the divided images are acquired as the information of CotentComponent to the first AdaptationSet.
(12) An information processing method including:
   a setting step that sets first AdaptationSet including a plurality of items of Representation corresponding to encoded streams having predetermined bit rates and second AdaptationSet not including Representation in an information processing apparatus.
(13) An information processing apparatus including:
   a player that plays back encoded streams having predetermined bit rates on the basis of first AdaptationSet including a plurality of items of Representation corresponding to the encoded streams and second AdaptationSet not including Representation.
(14) An information processing method including:
   a playing step that plays back encoded streams having predetermined bit rates on the basis of first AdaptationSet including a plurality of items of Representation corresponding to the encoded streams and second AdaptationSet not including Representation in an information processing apparatus.

### [Reference Signs List]

14 Moving-image playback terminal, 211 File generating apparatus, 250 Mosaic image, 251 through 254 Thumbnail image, 270 Screen, 295 Display controller

## Claims

1. An information processing apparatus comprising:
a setting section that sets first AdaptationSet including a plurality of items of Representation corresponding to encoded streams having predetermined bit rates and second AdaptationSet not including Representation.

2. The information processing apparatus according to claim 1, wherein the setting section adds information indicating that the first AdaptationSet and the second AdaptationSet are related to each other to the second AdaptationSet.

3. The information processing apparatus according to claim 1, wherein the setting section sets the first AdaptationSet and the second AdaptationSet in a management file that manages files of the encoded streams.

4. The information processing apparatus according to claim 1, wherein the encoded streams corresponding to the items of Representation included in the first AdaptationSet are encoded streams of one image that have different bit rates, and
the setting section adds respective positions on a screen of a plurality of divided images that make up the image to the second AdaptationSet.

5. The information processing apparatus according to claim 4, wherein the setting section adds an entity from which files corresponding to the respective divided images are acquired to the second AdaptationSet.

6. The information processing apparatus according to claim 4, wherein the setting section adds the respective positions on the screen of the divided images to respective different items of information of the second AdaptationSet.

7. The information processing apparatus according to claim 6, wherein the setting section adds an entity from which files corresponding to the respective divided images are acquired to the second AdaptationSet that includes the positions on the screen of the divided images.

8. The information processing apparatus according to claim 6, wherein the setting section adds information identifying the divided images corresponding to the second AdaptationSet to the second AdaptationSet.

9. The information processing apparatus according to claim 1, wherein the setting section adds information representing the first AdaptationSet to the first AdaptationSet, and adds information representing the second AdaptationSet to the second AdaptationSet.

10. The information processing apparatus according to claim 1, wherein the encoded streams corresponding to the items of Representation included in the first AdaptationSet are encoded streams of one image that have different bit rates, and
the setting section adds respective positions on a screen of a plurality of divided images that make up the image as information of CotentComponent to the first AdaptationSet.

11. The information processing apparatus according to claim 10, wherein the setting section adds an entity from which files corresponding to the divided images are acquired as the information of CotentComponent to the first AdaptationSet.

12. An information processing method comprising:
a setting step that sets first AdaptationSet including a plurality of items of Representation corresponding to encoded streams having predetermined bit rates and second AdaptationSet not including Representation in an information processing apparatus.

13. An information processing apparatus comprising:
a player that plays back encoded streams having predetermined bit rates on the basis of first AdaptationSet including a plurality of items of Representation corresponding to the encoded streams and second AdaptationSet not including Representation.

14. An information processing method comprising:
a playing step that plays back encoded streams having predetermined bit rates on the basis of first AdaptationSet including a plurality of items of Representation corresponding to the encoded streams and second AdaptationSet not including Representation in an information processing apparatus.
